# EUROPÄISCHE PATENTSCHRIFT

(11) **EP 1 748 245 B1**
(45) Veröffentlichungstag und Bekanntmachung des Hinweises auf die Patenterteilung: **22.10.2014**
(21) Anmeldenummer: 06009281.4
(22) Anmeldetag: 05.05.2006
(51) Int. Cl.: F16P 3/14

(54) **Schutzeinrichtung für Maschinen, wie Abkantpressen, Schneidemaschinen ,Stanzmaschinen oder dergleichen**
Protective device for machines such as bending presses, cutting machines, punching machines or the like
Dispositif de protection pour machines telles que presses-plieuses, découpeuses, machines à estamper ou analogues

(30) Priorität: 28.07.2005 DE 102005035286
(43) Veröffentlichungstag der Anmeldung: 31.01.2007
(73) Patentinhaber: Fiessler Elektronik GmbH & Co. KG, 73734 Esslingen (DE)
(72) Erfinder: Fiessler, Lutz, Dr., 73773 Aichwald (DE); Fiessler, Götz, 73732 Esslingen (DE)
(74) Vertreter: Kocher, Mark Werner

(56) Entgegenhaltungen:
- EP-A- 0 789 182
- DE-A1- 10 123 562
- US-A- 3 603 688
- US-A- 5 526 725
- US-B1- 6 856 862

## Beschreibung

Die Erfindung betrifft eine Schutzeinrichtung für Maschinen, wie Abkantpressen, Schneidemaschinen, Stanzmaschinen oder dergleichen. Ferner betrifft die Erfindung ein Verfahren zum Betreiben einer Schutzeinrichtung für Maschinen.

Bei einer aus der DE 101 23 562 A1 bekannten Schutzeinrichtung muss ein Sicherheitsabstand der Lichtschrankenanordnung zu einem ersten Werkzeug, beispielsweise einem Oberwerkzeug, eingestellt werden. Verschiedene auswechselbare Werkzeuge haben jedoch verschiedene Dimensionen, so dass dieser Sicherheitsabstand jeweils neu eingestellt werden muss. Bei der bekannten Schutzeinrichtung erfolgt dies dadurch, dass die Lichtschranke zunächst gegen das erste Werkzeug solange bewegt wird, bis die Lichtschrankenanordnung oder wenigstens ein Lichtstrahl derselben unterbrochen wird. Danach erfolgt eine Bewegung in der entgegengesetzten Richtung, wobei die den Sicherheitsabstand vorgebende Wegstrecke der zweiten Bewegung durch eine elektrische Mess- und/oder Steuereinrichtung vorgebbar ist. Diese beiden Bewegungen erfordern jedoch zum einen umfangreiche technische Maßnahmen und zum anderen einen nicht unerheblichen Zeitaufwand.

Aus der US 6,856,862 ist ein Lichtvorhang-Sicherheitssystem für einen Wafer-Manipulator bekannt, bei dem eine Steuereinrichtung Steuerbefehle an einen Roboterarm bereitstellt und dieser die Steuerbefehle in Bewegungen zur Handhabung von Wafern umsetzt. Das Lichtvorhang-Sicherheitssystem umfasst eine Vorrichtung zur Erzeugung des Lichtvorhangs, die derart eingerichtet ist, dass ein Zugang zum Roboterarm eine Unterbrechung des Lichtvorhangs erfordert. Das Lichtvorhangs-Sicherheitssystem erfasst die Steuerbefehle der Steuereinrichtung und lässt eine Unterbrechung des Lichtvorhangs nur dann zu, wenn sich der Roboterarm in einem sicheren Zustand befindet. Wenn das Lichtvorhang-Sicherheitssystern aktiv ist, erfolgt bei Unterbrechung des Lichtvorhangs eine Zwangsabschaltung der Energieversorgung für den Roboterarm.

Eine Aufgabe der Erfindung besteht darin, eine Schutzeinrichtung und ein Verfahren zum Betreiben einer Schutzeinrichtung zu schaffen, mit denen die Einstellung des Sicherheitsabstands schneller und einfacher erfolgen kann.

Diese Aufgabe wird erfindungsgemäß für eine Schutzeinrichtung der eingangs genannten Art mit den Merkmalen des Anspruchs 1 gelöst.

Vorteile der erfindungsgemäßen Schutzeinrichtung bestehen insbesondere darin, dass nur noch eine einzige Bewegung in eine Richtung durchgeführt werden muss. Die Eingabe der Werkzeugdaten kann schnell und einfach erfolgen, wobei die Daten werkzeugspezifisch vorliegen und die Sollposition wird entweder motorisch angefahren oder die Lichtschrankenanordnung wird durch manuelle Verstellung der Halteeinrichtung in die Sollposition bewegt, wobei dann dort entweder die Indikatormittel das Erreichen der Sollposition anzeigen oder alternativ und zusätzlich die Lichtschrankenanordnung abgebremst und mittels einer Bremse oder dergleichen arretiert wird.

Die Positionsmesseinrichtung ist hierbei zur Erfassung der Relativposition zwischen dem ersten Maschinenteil und der Lichtschrankenanordnung ausgebildet.Durch die in den Unteransprüchen aufgeführten Maßnahmen sind vorteilhafte Weiterbildungen und Verbesserungen der im Anspruch 1 angegebenen Schutzeinrichtung möglich.

Die Halteeinrichtung ist im Anfahren der Sollposition zweckmäßigerweise mit einer motorischen oder manuellen Verstelleinrichtung versehen.

Die Indikatormittel können als optische und/oder akustische Indikatormittel ausgebildet sein.

In vorteilhafter Weise besitzt die Halteeinrichtung eine Brems- und/oder Klemm- oder Rasteinrichtung als Fixiereinrichtung für die Lichtschrankenanordnung in der jeweils erreichten Sollposition. Dabei kann es sich um eine elektromagnetisch oder elektrisch oder mechanisch oder pneumatisch oder hydraulisch wirkende Fixiereinrichtung handeln.

Die Aufgabe der Erfindung wird für ein Verfahren zum Betreiben einer Schutzeinrichtung für Maschinen mit den Merkmalen des Anspruchs 10 gelöst.

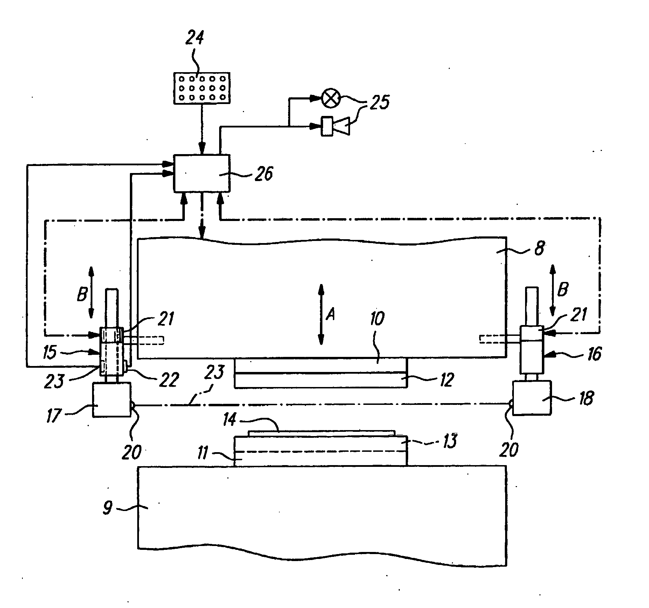

Ein Ausführungsbeispiel der Erfindung ist in der Zeichnung dargestellt und in der nachfolgenden Beschreibung näher erläutert.

Die einzige Figur zeigt eine Längsseitenansicht einer mit einer Lichtschrankenanordnung versehenen Abkantpresse.

Die in der einzigen Figur dargestellte Abkantpresse besteht im Wesentlichen aus einem mit einem Oberwerkzeug 10 versehenen oberen Maschinenteil 8, das gegen ein feststehendes, mit einem Unterwerkzeug 11 versehenes unteres Maschinenteil 9 bewegbar ist.

Die gegensinnige Arbeitsbewegungsrichtung A ist mit einem Doppelpfeil gekennzeichnet. Selbstverständlich kann in einer alternativen Ausführung auch das Oberwerkzeug 10 feststehend und das Unterwerkzeug 11 bewegbar ausgebildet sein. Das langgestreckte Oberwerkzeug 10 besitzt einen Arbeitsbereich 12 mit keilförmigem Querschnitt, während das Unterwerkzeug 11 eine entsprechende keilförmige Rinne 13 besitzt, in die der Arbeitsbereich 12 in der Arbeitsbewegung eingreift und dadurch das auf dem Unterwerkzeug 11 liegende zu bearbeitende Blech 14 biegt bzw. abkantet.

Die übrigen Bereiche der an sich bekannten Abkantpresse sind zur Vereinfachung nicht dargestellt. Oberwerkzeug 10 und Unterwerkzeug 11 können selbstverständlich unterschiedliche Längen und unterschiedliche Querschnittsgestalt aufweisen und sind jeweils auswechselbar am oberen Maschinenteil 8 bzw. unteren Maschinenteil 9 befestigt.

Als Halteeinrichtung sind jeweils an den einander entgegengesetzten Schmalseiten des oberen Maschinenteils 8 Führungen 15, 16 befestigt, beispielsweise angeschraubt. In diesen Führungen 15, 16 sind Halterungen 17, 18 für eine Lichtschrankenanordnung 20 in einer vertikalen Einstellbewegung bewegbar, deren Richtung durch Doppelpfeile B dargestellt ist und die der Arbeitsbewegungsrichtung A entspricht. Zur motorischen Bewegung der Halterungen 17, 18 sind diese mit motorischen Antrieben 21 versehen, die beispielsweise als Elektromotoren, Linearmotoren, Antriebszylinder oder dergleichen ausgebildet sein können. Sie können prinzipiell auch an den Führungen 15, 16 angeordnet sein. Die Lichtschrankenanordnung 20 besteht in an sich bekannter Weise aus wenigstens einem Licht-Sender, beispielsweise Laser-Sender und wenigstens einem entsprechenden Licht-Empfänger, wobei der wenigstens eine Laser-Sender an der einen Halterung 17 und der wenigstens eine Laser-Empfänger an der anderen Halterung 18 angeordnet sind. Es ist prinzipiell auch möglich, die Zahl der Sender durch einen Strahlteiler in mehrere Sendelichtstrahlen aufzuteilen oder aufzuweiten, so dass sich ein breiter Lichtstrahl ergibt. Weiterhin können auch parallele Lichtschranken durch parallele Laserstrahlen gebildet werden, die durch Umlenkung mittels einer Reflektionseinrichtung erzeugt werden. Bei einer solchen Ausführung sind dann beispielsweise der Sender und der Empfänger an der einen Halterung 17 und die Reflektionseinrichtung an der anderen Halterung 18 angeordnet. Anstelle einer vielzahl einzelner Lichtschranken kann die Lichtschrankenanordnung 20 auch einen breiten und/oder aufgefächerten Sender-Lichtstrahl besitzen dem eine Empfängerfläche, z.B. eine Kamera gegenüber steht. Die einzelnen Kamerapixel oder Pixelbereiche können dabei die Funktion einzelner Lichtschranken ausüben. Dabei können auch bei dieser Ausgestaltung Sender und Empfänger auf derselben Seite und ein Reflektor auf der gegenüber liegenden Seite angeordnet sein.

Die Schutzwirkung der beschriebenen Schutzeinrichtung besteht darin, dass die Schließbewegung des Oberwerkzeugs 10 zum Unterwerkzeug 11 hin abrupt gestoppt wird, wenn einer der Lichtstrahlen der Lichtschrankenanordnung 20 unterbrochen wird, wobei dieser Lichtstrahl auswählbar ist. Diese Unterbrechung wird beispielsweise durch ein menschliches Körperteil der Bedienungsperson oder ein sonstiges Hindernis in der Bewegungsbahn des Oberwerkzeugs ausgelöst. Da derartige Abkantpressen oder ähnliche Maschinen häufig handbedient sind, besteht vor allem die Gefahr, dass die Hand oder der Arm der Bedienungsperson in die Arbeitsbewegungsbahn gelangt und eingeklemmt oder abgetrennt werden kann. Der Sicherheitsabstand zwischen dem betreffenden Laserstrahl der Lichtschrankenanordnung 20 hinsichtlich des Oberwerkzeugs 10 sollte daher so bemessen sein, dass zum einen beispielsweise kein Finger dazwischen geschoben werden kann, andererseits sollte dieser Sicherheitsabstand so groß sein, dass bei einer Lichtschrankenunterbrechung die Schließbewegung noch rechtzeitig vor dem Hindernis abgebremst bzw. gestoppt werden kann. Der Sicherheitsabstand wird daher beispielsweise zwischen 3 und 10 mm eingestellt.

Derartige Lichtschrankenanordnungen sind beispielsweise neben dem eingangs genannten Stand der Technik aus der DE 102 32 795 A1, der DE 102 46 609 A1 oder der DE 103 42 431 A1 bekannt. Weitere Details und Ausführungsvarianten von Lichtschranken und Lichtschrankenanordnungen können diesem Stand der Technik entnommen werden.

Eine elektronische Steuereinrichtung 26 dient zur Steuerung der Bewegung des oberen Maschinenteils 8 sowie zur Steuerung der motorischen Antriebe 21 in den Führungen 15, 16 und damit der Lichtschrankenanordnung 20 in der Einstellbewegungsrichtung B. Eine Positionsmesseinrichtung 22 dient zur Erfassung der Position der Lichtschrankenanordnung 20 relativ zum oberen Maschinenteil 8 bzw. zum daran angeordneten Oberwerkzeug 10. Je nach Ausführung der Maschine kann auch noch eine Messeinrichtung zur Erfassung der Bewegung und/oder Position des oberen Maschinenteils 8 und damit des Oberwerkzeugs 10 vorgesehen sein, die zur Vereinfachung nicht dargestellt ist und die auch für die vorliegende Erfindung keine Rolle spielt.

Eine Brems- und Halteeinrichtung 23 ist ebenfalls in einer der Führungen 15, 16 oder in beiden Führungen angeordnet, die als elektromagnetisch, elektrisch, mechanisch, pneumatisch oder hydraulisch wirkende Fixiereinrichtung ausgebildet ist. Sie kann auch an einer anderen Stelle angeordnet sein, wobei lediglich sichergestellt sein muss, dass sie zur Abbremsung der Verstellbewegung der Lichtschrankenanordnung 20 oder zum Festhalten derselben in der Sollposition geeignet ist.

Eine Eingabeeinrichtung 24, die beispielsweise als Tastatur oder drahtgebundene oder drahtlose elektronische Eingabeeinrichtung ausgebildet ist, ist mit der elektronischen Steuereinrichtung 26 verbunden oder steht in Verbindung mit derselben. Weiterhin sind Indikatormittel 25 mit der elektronischen Steuereinrichtung 26 verbunden, die zur optischen Signalgebung beim Ausführungsbeispiel als Signallampe und zur akustischen Signalgebung als Signalgeber ausgebildet sind. Beides ist alternativ oder gemeinsam möglich.

Da verschiedene Oberwerkzeuge 10 unterschiedlich dimensioniert sein können, muss der Sicherheitsabstand jeweils beim Auswechseln eines Oberwerkzeugs 10 neu eingestellt bzw. justiert werden. Hierzu werden diesem jeweiligen Werkzeug zugeordnete spezifische Werkzeugdaten über die Eingabeeinrichtung 25 in die Steuereinrichtung 26 eingegeben. Bei diesen Werkzeugdaten kann es sich um Abmessungen oder Codenummern handeln, aus denen in der elektronischen Steuereinrichtung 26 der zugeordnete Positionssollwert für die Lichtschrankenanordnung 20 zum Beispiel tabellarisch oder erfindungsgemäß rechnerisch ermittelt wird. Alternativ hierzu kann auch direkt der Positionssollwert angegeben werden, der aus dem Werkzeugdatenblatt entnommen werden kann. Mit Hilfe einer Positionsregeleinrichtung, die beispielsweise in der elektronischen Steuereinrichtung 26 enthalten sein kann, werden die motorischen Antriebe 21 aktiviert und der angegebenen Positionssollwert angefahren. Bei Erreichen desselben wird die Brems- und/oder Halteeinrichtung 23 betätigt, so dass die Lichtschrankenanordnung 20 in der erreichten Sollposition fixiert wird. Diese Fixierung kann beispielsweise durch Klemmen oder Verrasten erfolgen.

Beim Auswechseln des Oberwerkzeugs 10 durch ein anderes Oberwerkzeug 10 muss eine neue Einstellung des Sicherheitsabstands erfolgen, jeweils in Abhängigkeit der dem neuen Oberwerkzeug zugeordneten Daten.

Sofern es sich bei den motorischen Antrieben 21 um selbstarretierende Antriebe handelt, beispielsweise um Spindelantriebe, so kann eine separate Brems- und/oder Halteeinrichtung 23 auch entfallen, da eine solche wirkungsmäßig in den motorischen Antrieben 21 dann integriert ist.

Alternativ zum motorischen Anfahren der Sollposition kann diese auch manuell eingestellt werden. Anstelle der motorischen Antriebe 21 treten dann manuelle Einstellmittel, beispielsweise Einstellkurbeln, Einstellknöpfe, Einstellringe oder dergleichen. Die Eingabe der Werkzeugdaten bzw. Sollwerte erfolgt in gleicher Weise. Anschließend wird dann die Lichtschrankenanordnung 20 manuell solange bewegt, bis entweder die Indikatormittel 25 das Erreichen der Sollposition anzeigen oder bis die Brems- und/oder Halteeinrichtung 23 die manuelle Bewegung automatisch stoppt und die Lichtschrankenanordnung 20 in der Sollposition fixiert. Selbstverständlich kann auch beides vorgesehen sein. Hierbei ist anzumerken, dass die Indikatormittel 25 auch bei einer motorischen Verstellung vorgesehen sein können, wobei jeweils akustische und/oder optische Signale ausgelöst werden können.

Damit während des Arbeitsvorgangs bei Erreichen des Werkstücks 14 durch die Lichtschrankenanordnung 20 bzw. deren Lichtstrahl oder deren Lichtstrahlen die Arbeitsbewegung nicht gestoppt wird, was selbstverständlich unerwünscht ist, sind in an sich bekannter Weise Maßnahmen vorgesehen, die dies verhindern, beispielsweise elektronische oder mechanische Mittel, wie sie im angegebenen Stand der Technik beschrieben sind.

In einer Ausgestaltung der Erfindung wird in der beschriebenen weise der Positionssollwert motorisch oder manuell nur unpräzise, also grob angefahren. Die Mittel zur mechanischen Bewegung und deren Steuerung können dadurch sehr einfach und kostengünstig realisiert werden. Anschließend wird dann der exakte Positionssollwert optisch justiert. Dies kann beispielsweise dadurch erfolgen, dass alle Lichtschranken der Lichtschrankenanordnung 20 durch die elektronische Steuereinrichtung 26 deaktiviert oder abgeschaltet werden, die außerhalb des Sicherheitsabstands bzw. -bereichs liegen. Die Positionsmesseinrichtung 22 liefert hierzu die erforderlichen Daten. Entsprechend werden bei einer Ausgestaltung der Lichtschrankenanordnung 20 mit breitem Lichtstrahl und Empfängerkamera diejenigen Kamerapixel oder -pixelbereiche deaktiviert, die außerhalb des Sicherheitsabstands bzw. -bereichs liegen.

## Patentansprüche

1. Schutzeinrichtung für Maschinen, wie Abkantpressen, Schneidemaschinen, Stanzmaschinen oder dergleichen, bei denen ein ein erstes Werkzeug (10) tragendes erstes Maschinenteil (28) Arbeitsbewegungen gegen ein ein zweites Werkzeug (11) tragendes zweites Maschinenteil (9) ausführt, mit einer wenigstens eine Lichtschranke, insbesondere Laser-Lichtschranke, aufweisenden Lichtschrankenanordnung (20), deren Strahlrichtung parallel zur Längsrichtung des ersten Werkzeugs (10) verläuft und die zwischen den beiden Werkzeugen (10, 11) an einem derselben so positionierbar ist, dass sie einen Sicherheitsabstand zum ersten Werkzeug (10) aufweist, wobei dieser Sicherheitsabstand durch eine verstellbar am ersten Maschinenteil (8) angeordnete Halteeinrichtung (15, 17) einstellbar ist, die die wenigstens eine Lichtschrankenanordnung (20) trägt, mit einer bei einer Lichtschranken-Unterbrechung die Arbeitsbewegung stoppenden Blockiereinrichtung, mit einer elektronischen Steuereinrichtung (26) zur Einstellung oder zur Unterstützung der Einstellung des Sicherheitsabstands, und mit einer zur Erfassung der Relativposition zwischen dem ersten Maschinenteil (8) und der Lichtschrankenanordnung (20) ausgebildeten Positionsmesseinrichtung (22) für die Lichtschrankenposition, mit einer Eingabeeinrichtung, die dazu ausgebildet ist, Werkzeugdaten in Abhängigkeit des jeweiligen Werkzeugs (10) in die elektronische Steuereinrichtung (26) einzugeben, wobei die elektronische Steuereinrichtung (26) eine Sollposition für die Lichtschrankenanordnung (20) aus den Werkzeugdaten rechnerisch ermittelt, und Mittel zur Verschiebung der Lichtschrankenanordnung (20) in die aus den Werkzeugdaten berechnete Sollposition vorgesehen sind und dass Indikatormittel (25) zur Erkennung des Erreichens der Sollposition und/oder Brems- und Haltemittel (23) zum Fixieren der Lichtschrankenanordnung (20) in der erreichten Sollposition vorgesehen sind.

2. Schutzeinrichtung nach Anspruch 1, **dadurch gekennzeichnet, dass** die Halteeinrichtung (15, 17) mit einer motorischen oder manuellen Verstelleinrichtung (21) versehen ist.

3. Schutzeinrichtung nach Anspruch 1 oder 2, **dadurch gekennzeichnet, dass** die Indikatormittel (25) als optische und/oder akustische Indikatormittel ausgebildet sind.

4. Schutzeinrichtung nach einem der vorhergehenden Ansprüche, **dadurch gekennzeichnet, dass** die Halteeinrichtung (15, 17) eine Brems- und/oder Klemm- oder Rasteinrichtung als Brems- und Haltemittel (23) oder Fixiereinrichtung für die Lichtschrankenanordnung (20) in der jeweils erreichten Sollposition aufweist.

5. Schutzeinrichtung nach Anspruch 4, **dadurch gekennzeichnet, dass** eine elektromagnetisch oder elektrisch oder mechanisch oder pneumatisch oder hydraulisch wirkende Fixiereinrichtung vorgesehen ist.

6. Schutzeinrichtung nach einem der vorhergehenden Ansprüche, **dadurch gekennzeichnet, dass** die Positionsmesseinrichtung an der Halteeinrichtung (15, 17) angeordnet ist.

7. Schutzeinrichtung nach einem der vorgehenden Ansprüche, **dadurch gekennzeichnet, dass** die elektronische Steuereinrichtung (26) Mittel zur optischen Feinjustierung der Sollposition nach dem mechanischen Anfahren der ungefähren oder ungenauen Sollposition besitzt.

8. Schutzeinrichtung nach Anspruch 7, **dadurch gekennzeichnet, dass** zur optischen Feinjustierung Abschaltmittel zur Abschaltung von Lichtschrankenbereichen vorgesehen sind, die außerhalb der Sicherheitsbereichs oder -abstands liegen.

9. Schutzeinrichtung nach Anspruch 8, **dadurch gekennzeichnet, dass** solche Lichtschrankenbereiche einzelne Lichtschranken oder einzelne Lichtempfängerbereiche der Lichtschrankenanordnung (20) sind.

10. Verfahren zum Betreiben einer Schutzeinrichtung für Maschinen, wie Abkantpressen, Schneidemaschinen, Stanzmaschinen oder dergleichen, bei denen ein ein erstes Werkzeug (10) tragendes erstes Maschinenteil (28) Arbeitsbewegungen gegen ein ein zweites Werkzeug (11) tragendes zweites Maschinenteil (9) ausführt, mit einer wenigstens eine Lichtschranke aufweisenden Lichtschrankenanordnung (20), deren Strahlrichtung parallel zur Längsrichtung des ersten Werkzeugs (10) verläuft und die zwischen den beiden Werkzeugen (10, 11) an einem derselben so positioniert wird, dass sie einen Sicherheitsabstand zum ersten Werkzeug (10) aufweist, wobei dieser Sicherheitsabstand durch eine verstellbar am ersten Maschinenteil (8) angeordnete Halteeinrichtung (15, 17) eingestellt wird, die die wenigstens eine Lichtschrankenanordnung (20) trägt, mit einer bei einer Lichtschranken-Unterbrechung die Arbeitsbewegung stoppenden Blockiereinrichtung, mit einer elektronischen Steuereinrichtung (26) zur Einstellung oder zur Unterstützung der Einstellung des Sicherheitsabstands, und mit einer zur Erfassung der Relativposition zwischen dem ersten Maschinenteil (8) und der Lichtschrankenanordnung (20) ausgebildeten Positionsmesseinrichtung (22) für die Lichtschrankenposition, wobei Brems- und Haltemittel (23) zum Fixieren der Lichtschrankenanordnung (20) in der erreichten Sollposition vorgesehen sind, wobei eine Eingabe von Werkzeugdaten in Abhängigkeit des jeweiligen Werkzeugs (10) mittels einer Eingabeeinrichtung in die elektronische Steuereinrichtung (26) vorgesehen ist und anschließend die elektronische Steuereinrichtung (26) eine Sollposition der Lichtschrankenanordnung (20) aus den Werkzeugdaten berechnet und eine Verschiebung der Lichtschrankenanordnung (20) in die aus den Werkzeugdaten berechnete Sollposition mit entsprechenden Mitteln vorgesehen wird, wobei ein Erreichen der Sollposition mit Hilfe vön Indikatormitteln (25) erkannt wird und/oder Brems- und Haltemittel (23) zum Fixieren der Lichtschrankenanordnung (20) in der erreichten Sollposition eingesetzt werden.

## Claims

1. Protective device for machines such as edging presses, cutting machines, stamping machines or the like, wherein a first machine part (28) supporting a first tool (10) performs working movements against a second machine part (9) supporting a second tool (11), the protective device comprising a photoelectric beam arrangement (20) having at least one photoelectric beam, in particular a laser photoelectric beam, the radiation direction of which extends parallel to the longitudinal direction of the first tool (10) and which can be positioned between the two tools (10, 11) on one of them in such a way that it has a safe distance from the first tool (10), this safe distance being adjustable by means of a holding device (16, 17) which is provided on the first machine part (8) and which supports the at least one photoelectric beam arrangement (20), the protective device further comprising a blocking device which blocks the working movement if a photoelectric beam is interrupted, an electronic control unit (26) for adjusting or supporting the adjustment of the safe distance and a position sensing device (22) designed to detect the relative position between the first machine part (8) and the photoelectric beam arrangement (20) for the detection of the photoelectric beam position, and further comprising an input device which is designed to input tool data as a function of the respective tool (10) into the electronic control unit (26), wherein the electronic control unit (26) determines by calculation from the tool data a desired position for the photoelectric beam arrangement (20), and wherein means are provided for moving the photoelectric beam arrangement (20) into the desired position calculated from the tool data, and wherein indicator means (25) for detecting the arrival at the desired position and/or braking or retaining means (23) for locating the photoelectric beam arrangement (20) in the desired position it has reached are provided.

2. Protective device according to claim 1, **characterised in that** the holding device (15, 17) is provided with a motor-driven or manual adjusting device (21).

3. Protective device according to claim 1 or 2, **characterised in that** the indicator means (25) are designed as visual and/or audible indicator means.

4. Protective device according to any of the preceding claims, **characterised in that** the holding device (15, 17) comprises a braking and/or clamping and/or latching device as braking and retaining means (23) or as a locating device for holding the photoelectric barrier arrangement (20) in the desired position is has reached.

5. Protective device according to claim 4, **characterised in that** an electro-magnetically or electrically or mechanically or pneumatically or hydraulically acting locating device is provided.

6. Protective device according to any of the preceding claims, **characterised in that** the position sensing device is located on the holding device (15, 17).

7. Protective device according to any of the preceding claims, **characterised in that** the electronic control unit (26) comprises means for the optical fine adjustment of the desired position after the mechanical approach to the approximate or imprecise desired position.

8. Protective device according to claim 7, **characterised in that**, for the optical fine adjustment, switch-off means for deactivating photoelectric barrier regions lying outside the safe zone or distance are provided.

9. Protective device according to claim 8, **characterised in that** such photoelectric barrier regions are individual photoelectric barriers or individual light detector regions of the photoelectric barrier arrangement (20).

10. Method for operating a protective device for machines such as edging presses, cutting machines, stamping machines or the like, wherein a first machine part (28) supporting a first tool (10) performs working movements against a second machine part (9) supporting a second tool (11), the protective device comprising a photoelectric beam arrangement (20) having at least one photoelectric beam the radiation direction of which extends parallel to the longitudinal direction of the first tool (10) and which is positioned between the two tools (10, 11) on one of them in such a way that it has a safe distance from the first tool (10), this safe distance being adjusted by means of a holding device (16, 17) which is adjustably provided on the first machine part (8) and which supports the at least one photoelectric beam arrangement (20), the protective device further comprising a blocking device which blocks the working movement if a photoelectric beam is interrupted, an electronic control unit (26) for adjusting or supporting the adjustment of the safe distance and a position sensing device (22) designed to detect the relative position between the first machine part (8) and the photoelectric beam arrangement (20) for the detection of the photoelectric beam position, wherein braking and retaining means (23) for locating the photoelectric beam arrangement (20) in the desired position it has reached are provided, wherein an input of tool data as a function of the respective tool (10) into the electronic control unit (26) by means of an input device is provided and wherein the electronic control unit (26) then calculates from the tool data a desired position of the photoelectric beam arrangement (20) and a movement of the photoelectric beam arrangement (20) into the desired position calculated from the tool data by suitable means is provided, wherein an arrival at the desired position is detected with the aid of indicator means (25), and/or wherein braking and/or retaining means (23) are used to locate the photoelectric beam arrangement (20) in the desired position it has reached.

## Revendications

1. Dispositif de protection destiné à des machines, telles que des presses-plieuses, des découpeuses, des machines à estamper ou similaires, pour lesquelles une première partie de machine (28) supportant un premier outil (10) exécute des mouvements de travail à l'encontre d'une deuxième partie de machine (9) supportant un deuxième outil (11), comprenant un ensemble de barrages photoélectriques (20) présentant au moins un barrage photoélectrique, en particulier un barrage photoélectrique laser, le sens de rayonnement dudit ensemble de barrages photoélectriques s'étendant de manière parallèle par rapport à la direction longitudinale du premier outil (10) et ledit ensemble de barrages photoélectriques pouvant être positionné entre les deux outils (10, 11) au niveau de l'un d'eux de telle sorte qu'il présente une distance de sécurité par rapport au premier outil (10), sachant que ladite distance de sécurité peut être réglée par un système de maintien (15, 17) disposé de manière à pouvoir être déplacé au niveau de la première partie de machine (8), lequel dispositif de maintien supporte au moins ensemble de barrages photoélectriques (20), comprenant un dispositif de blocage stoppant le mouvement de travail lors d'une coupure du barrage photoélectrique, comprenant un dispositif de commande (26) électronique servant à régler ou à soutenir le réglage de la distance de sécurité, et comprenant un dispositif de mesure de position (22) réalisé afin de détecter la position relative entre la première partie de machine (8) et l'ensemble de barrages photoélectriques (20) pour la position des barrages photoélectriques, comprenant un dispositif d'entrée réalisé pour entrer des données relatives aux outils en fonction de l'outil (10) respectif dans le dispositif de commande (26) électronique, sachant que le dispositif de commande (26) électronique détermine par des calculs une position théorique pour l'ensemble de barrages photoélectriques (20) à partir des données relatives aux outils, et sachant que des moyens sont prévus pour déplacer par coulissement l'ensemble de barrages photoélectriques (20) dans la position théorique calculée à partir des données relatives aux outils, et en ce que des moyens indicateurs (25) sont prévus pour identifier l'atteinte de la position théorique et/ou des moyens de freinage et de maintien (23) sont prévus pour fixer l'ensemble de barrages photoélectriques (20) dans la position théorique atteinte.

2. Dispositif de protection selon la revendication 1, **caractérisé en ce que** le dispositif de maintien (15, 17) est pourvu d'un système de déplacement (21) motorisé ou manuel.

3. Dispositif de protection selon la revendication 1 ou 2, **caractérisé en ce que** les moyens indicateurs (25) sont réalisés sous la forme de moyens indicateurs optiques et/ou acoustiques.

4. Dispositif de protection selon l'une quelconque des revendications précédentes, **caractérisé en ce que** le dispositif de maintien (15, 17) présente un dispositif de freinage et/ou de serrage ou d'encliquetage sous la forme de moyens de freinage et de maintien (23) ou sous la forme d'un dispositif de fixation pour l'ensemble de barrages photoélectriques (20) dans la position théorique respectivement atteinte.

5. Dispositif de protection selon la revendication 4, **caractérisé en ce qu'**est prévu un dispositif de fixation à action électromagnétique ou électrique ou mécanique ou pneumatique ou hydraulique.

6. Dispositif de protection selon l'une quelconque des revendications précédentes, **caractérisé en ce que** le dispositif de mesure de position est disposé au niveau du dispositif de maintien (15, 17).

7. Dispositif de protection selon l'une quelconque des revendications précédentes, **caractérisé en ce que** le dispositif de commande (26) électronique comporte des moyens servant à ajuster avec précision de manière optique la position théorique après l'approche mécanique de la position théorique approximative et non précise.

8. Dispositif de protection selon la revendication 7, **caractérisé en ce que** sont prévus, pour l'ajustement optique avec précision, des moyens de mise hors service servant à mettre hors service des zones de barrages photoélectriques, lesdits moyens de mise hors service se trouvant en dehors de la zone de sécurité ou de la distance de sécurité.

9. Dispositif de protection selon la revendication 8, **caractérisé en ce que** lesdites zones de barrages photoélectriques sont divers barrages photoélectriques ou diverses zones de réception de lumière de l'ensemble de barrages photoélectriques (20).

10. Procédé servant à faire fonctionner un dispositif de protection pour des machines, telles que des presses-plieuses, des découpeuses, des machines à estamper ou similaires, pour lesquelles une première partie de machine (28) supportant un premier outil (10) exécute des mouvements de travail à l'encontre d'une deuxième partie de machine (9) supportant un deuxième outil (11), comprenant un ensemble de barrages photoélectriques (20) présentant au moins un barrage photoélectrique, le sens de rayonnement dudit ensemble de barrages photoélectriques s'étendant de manière parallèle par rapport à la direction longitudinale du premier outil (10) et étant positionné entre les deux outils (10, 11) au niveau de l'un d'eux de telle sorte qu'il présente une distance de sécurité par rapport au premier outil (10), sachant que ladite distance de sécurité est réglée par un dispositif de maintien (15, 17) disposé de manière à pouvoir être déplacé au niveau de la première partie de machine (8), ledit dispositif de maintien supportant l'ensemble de barrages photoélectriques (20) au moins au nombre de un, comprenant un dispositif de blocage arrêtant le mouvement de travail lors d'une coupure des barrages photoélectriques, comprenant un dispositif de commande (26) électronique servant à régler ou à soutenir le réglage de la distance de sécurité, et comprenant un dispositif de mesure de position (22) réalisé pour détecter la position relative entre la première partie de machine (8) et l'ensemble de barrages photoélectriques (20) pour la position des barrages photoélectriques, sachant que des moyens de freinage et de maintien (23) sont prévus pour fixer l'ensemble de barrages photoélectriques (20) dans la position théorique atteinte, sachant qu'une entrée de données relatives aux outils est prévue en fonction de l'outil (10) respectif au moyen d'un dispositif d'entrée dans le dispositif de commande (26) électronique et sachant qu'immédiatement après le dispositif de commande (26) électronique calcule une position théorique de l'ensemble de barrages photoélectriques (20) à partir des données relatives aux outils et qu'un déplacement par coulissement de l'ensemble de barrages photoélectriques (20) est prévu dans la position théorique calculée à partir des données relatives aux outils à l'aide des moyens correspondants, sachant qu'on identifie l'atteinte de la position théorique à l'aide de moyens indicateurs (25) et/ou qu'on, utilise des moyens de freinage et de maintien (23) pour fixer l'ensemble de barrages photoélectriques (20) dans la position théorique atteinte.
